# EUROPEAN PATENT SPECIFICATION

(11) **EP 3 588 226 B1**
(45) Date of publication and mention of the grant of the patent: **24.06.2020**
(21) Application number: 18180826.2
(22) Date of filing: 29.06.2018
(51) Int. Cl.: G05D 1/00, G05D 1/02, B60W 50/04

(54) **METHOD AND ARRANGEMENT FOR GENERATING CONTROL COMMANDS FOR AN AUTONOMOUS ROAD VEHICLE**
VERFAHREN UND ANORDNUNG ZUR ERZEUGUNG VON STEUERBEFEHLEN FÜR EIN AUTONOMES STRASSENFAHRZEUG
PROCÉDÉ ET DISPOSITIF POUR GÉNÉRER DES INSTRUCTIONS DE COMMANDE POUR UN VÉHICULE ROUTIER AUTONOME

(43) Date of publication of application: 01.01.2020
(73) Proprietor: Zenuity AB, 417 56 Göteborg (SE)
(72) Inventor: MOHAMMADIHA, Nasser, 414 67 GÖTEBORG (SE); PANAHANDEH, Ghazaleh, 414 67 GÖTEBORG (SE); INNOCENTI, Christopher, 442 60 KODE (SE); LINDÈN, Henrik, 46132 TROLLHÄTTAN (SE)
(74) Representative: Bergenstråhle Group AB

(56) References cited:
- WO-A2-2017/120336
- WO-A2-2017/155598
- US-A1- 2018 120 843
- ANDREAS RESCHKA ET AL: "A surveillance and safety system based on performance criteria and functional degradation for an autonomous vehicle", INTELLIGENT TRANSPORTATION SYSTEMS (ITSC), 2012 15TH INTERNATIONAL IEEE CONFERENCE ON, IEEE, 16 September 2012 (2012-09-16), pages 237-242, XP032264014, DOI: 10.1109/ITSC.2012.6338682 ISBN: 978-1-4673-3064-0

## Description

### Technical field

The present disclosure relates generally to autonomous vehicle control technologies, and particularly to a method for generating validated control commands for an autonomous road vehicle. It also relates to an arrangement for generating validated control commands for an autonomous road vehicle and an autonomous vehicle comprising such an arrangement.

### Background

In order to perform travel to some intended destination autonomous road vehicles usually need to process and interpret large amounts of information. Such information may include visual information, e.g. information captured from cameras, information from radars or lidars, and may also include information obtained from other sources, such as from GPS devices, speed sensors, accelerometers, suspension sensors, etc..

During the travel of an autonomous road vehicle decisions needs to be made in real time according to the available information. Such decisions may include decisions to perform braking, acceleration, lane-changing, turns, U-turns, reversing and the like, and the autonomous road vehicle is controlled according to the decision-making result.

WO2017125209 A1 discloses a method for operating a motor vehicle system which is designed to guide the motor vehicle in different driving situation classes in a fully automated manner, wherein - a computing structure comprising multiple analysis units is used to ascertain control data to be used from surroundings data describing the surroundings of the motor vehicle and ego data describing the state of the motor vehicle as driving situation data for guiding the motor vehicle in a fully automated manner and to use the control data in order to guide the motor vehicle, - each analysis unit ascertains output data from output data of at least one other analysis unit and/or driving situation data, and - at least some of the analysis units are designed as a neural net at least partly on the basis of software. At least some of the analysis units designed as a neural net are produced dynamically from a configuration object which can be configured using configuration parameter sets during the runtime, wherein - a current driving situation class is ascertained from multiple specified driving situation classes, each driving situation class being assigned at least one analysis function, using at least some of the driving situation data, - configuration parameter sets assigned to the analysis functions of the current driving situation class are retrieved from a database, and - analysis units which carry out the analysis function and which have not yet been provided are produced by configuring configuration objects using the retrieved configuration parameter sets.

WO2017120336 A2 discloses systems and methods for navigating an autonomous vehicle using reinforcement learning techniques. In one implementation, a navigation system for a host vehicle may include at least one processing device programmed to: receive, from a camera, a plurality of images representative of an environment of the host vehicle; analyze the plurality of images to identify a navigational state associated with the host vehicle; provide the navigational state to a trained navigational system; receive, from the trained navigational system, a desired navigational action for execution by the host vehicle in response to the identified navigational state; analyze the desired navigational action relative to one or more predefined navigational constraints; determine an actual navigational action for the host vehicle, wherein the actual navigational action includes at least one modification of the desired navigational action determined based on the one or more predefined navigational constraints; and cause at least one adjustment of a navigational actuator of the host vehicle in response to the determined actual navigational action for the host vehicle.

US2017357257 A1 discloses a vehicle control method and device and a method and device for obtaining a decision model. The vehicle control method includes the steps of obtaining current external environment information and map information in real time in the running process of an unmanned vehicle; and determining vehicle state information corresponding to the external environment information and the map information which are obtained every time according to the decision model which is obtained through pre-training and embodies the correspondence relationship among the external environment information and the map information and the vehicle state information, and controlling driving states of the unmanned vehicle according to the determined vehicle state information.

It is further known from the publication by Mariusz Bojarski, et al., "End to End Learning for Self-Driving Cars", arXiv:1604.07316v1 [cs.CV] 25 Apr 2016, to train a convolutional neural network (CNN) to map raw pixels from a single front-facing camera of an autonomous road vehicle directly to steering commands. With minimum training data from humans a system trained accordingly may learn to drive in traffic on local roads with or without lane markings and on highways. It may also operate in areas with unclear visual guidance, such as in parking lots and on unpaved roads. Such a system may automatically learn internal representations of the necessary processing steps, such as detecting useful road features, with only a human provided steering angle as a training signal.

### Summary

An object of the present invention is to provide a method and arrangement providing for improved safety when generating control commands for an autonomous road vehicle.

The invention is defined by the appended independent claims. Embodiments are set forth in the appended dependent claims and in the figures.

According to a first aspect there is provided a method for generating validated control commands for an autonomous road vehicle that comprises: providing as input data to an end-to-end trained neural network system raw sensor data from on-board sensors of the autonomous road vehicle as well as object-level data and tactical information data; mapping, by the end-to-end trained neural network system, input data to control commands for the autonomous road vehicle over pre-set time horizons; subjecting the control commands for the autonomous road vehicle over the pre-set time horizons to a safety module arranged to perform risk assessment of planned trajectories resulting from the control commands for the autonomous road vehicle over the pre-set time horizons; validating as safe and outputting from the safety module validated control commands for the autonomous road vehicle.

In a further embodiment the method further comprises adding to the end-to-end trained neural network system a machine learning component.

In a yet further embodiment the method further comprises providing as a feedback to the end-to-end trained neural network system validated control commands for the autonomous road vehicle validated as safe by the safety module.

In a still further embodiment the method comprises providing as raw sensor data at least one of: image data; speed data and acceleration data, from one or more on-board sensors of the autonomous road vehicle.

In an additional embodiment the method further comprises providing as object-level data at least one of: the position of surrounding objects; lane markings and road conditions.

In yet an additional embodiment the method further comprises providing as tactical information data at least one of: electronic horizon (map) information, comprising current traffic rules and road geometry, and high-level navigation information.

According to a second aspect there is provided an arrangement for generating validated control commands for an autonomous road vehicle, that comprises: an end-to-end trained neural network system arranged to receive an input of raw sensor data from on-board sensors of the autonomous road vehicle as well as object-level data and tactical information data; the end-to-end trained neural network system further being arranged to map input data to control commands for the autonomous road vehicle over pre-set time horizons; a safety module arranged to receive the control commands for the autonomous road vehicle over the pre-set time horizons and perform risk assessment of planned trajectories resulting from the control commands for the autonomous road vehicle over the pre-set time horizons; the safety module further being arranged to validate as safe and output validated control commands for the autonomous road vehicle.

In a further embodiment the arrangement further comprises that the end-to-end trained neural network system further comprises a machine learning component.

In a yet further embodiment the arrangement further is arranged to feedback to the end-to-end trained neural network system validated control commands for the autonomous road vehicle validated as safe by the safety module.

In a still further embodiment the arrangement further comprises the end-to-end trained neural network system being arranged to receive as raw sensor data at least one of: image data; speed data and acceleration data, from one or more on-board sensors of the autonomous road vehicle.

In an additional embodiment the arrangement further comprises the end-to-end trained neural network system being arranged to receive as object-level data at least one of: the position of surrounding objects; lane markings and road conditions.

In yet an additional embodiment the arrangement further comprises the end-to-end trained neural network system being arranged to receive as tactical information data at least one of: electronic horizon (map) information, comprising current traffic rules and road geometry, and high-level navigation information.

Also, here envisaged is an autonomous road vehicle that comprises an arrangement for generating validated control commands as set forth herein.

The above embodiments have the beneficial effects of providing an end-to-end solution for improved safety holistic decision making for autonomous road vehicles in complex traffic environments.

### Brief description of drawings

In the following, embodiments herein will be described in greater detail by way of example only with reference to attached drawings, in which:
Fig. 1 illustrates schematically a method for generating validated control commands for an autonomous road vehicle according to embodiments herein.
Fig. 2 illustrates schematically an example embodiment of an arrangement comprising an end-to-end trained neural network system for generating validated control commands for an autonomous road vehicle.

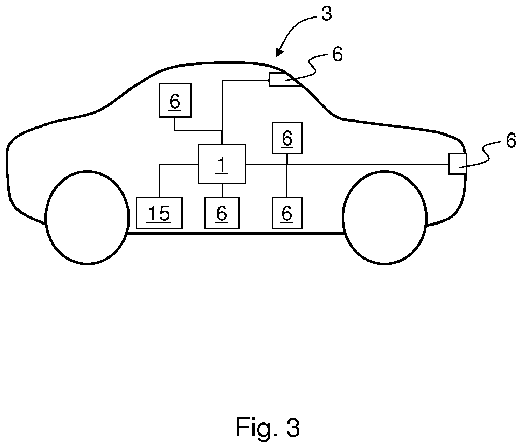

Fig. 3 illustrates schematically an autonomous road vehicle comprising an arrangement for generating validated control commands for an autonomous road vehicle according to an example embodiment.

### Description of embodiments

In the following will be described some example embodiments of a method and arrangement 1 for generating validated control commands for an autonomous road vehicle 3. The autonomous road vehicle 3 may be a car, a truck, a bus etc. The autonomous road vehicle 3 may further be a fully autonomous (AD) vehicle or a partially autonomous vehicle with advanced driver-assistance systems (ADAS).

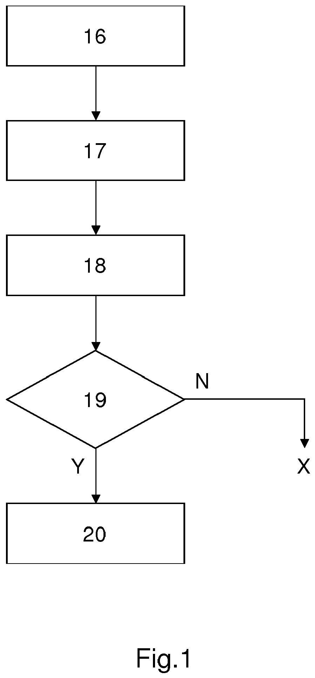

According to the proposed method, as illustrated in figure 1, raw sensor data 5 from on-board sensors 6 of the autonomous road vehicle 3 as well as object-level data 7 and tactical information data 8 is provided 16 as input data to an end-to-end trained neural network system 4.

Raw sensor data 5 may be provided as at least one of: image data; speed data and acceleration data, from one or more on-board sensors 6 of the autonomous road vehicle 3. Thus, raw sensor data 5 may for example be images from the autonomous road vehicle's vision system and information about speed and accelerations, such as e.g. obtainable by tapping into the vehicle's Controller Area Network (CAN) or similar. The image data can include images from surround view cameras and also consist of several recent images.

Object-level data 7 may e.g. be provided as at least one of: the position of surrounding objects; lane markings and road conditions.

Tactical information data 8 may e.g. be provided as at least one of: electronic horizon (map) information, comprising current traffic rules and road geometry, and high-level navigation information. Electronic horizon (map) information about current traffic rules and road geometry enables the neural network system 4 to take things such as allowable speed, highway exits, roundabouts, and distances to intersections into account when making decisions.

In order to guide the neural network system 4 in situations when lane-changes, highway exits, or similar actions are needed, high-level navigation information should to be included as input to the neural network system 4. This way, the neural network system 4 will be able to take user preference into account, for example driving to a user specified location.

Raw sensor data 5, such as image data, and object level data 7 do not have to be synchronous. Previously sampled object level data 7 may e.g. be used together with current image data.

The neural network system 4 may either be based on convolutional neural networks (CNNs) or on recurrent neural networks (RNNs). End-to-end training of the neural network 4 is to be done prior to using the neural network 4 in accordance with the proposed method and should be performed end-to-end in either a supervised fashion, where the neural network 4 gets to observe expert driving behavior for a very large amount of possible traffic scenarios and/or by means of reinforcement learning in a simulated environment.

In the supervised case, using a very large and diverse data set will enable a model to become as general as possible in operating range. In a reinforcement setting, the neural network system 4 will be trained in a simulated environment where the neural network system 4 will try to improve good behavior and suppress bad behavior. Doing this in simulations will allow the training of the neural network system 4 to be more exploratory, without imposing risk onto people or expensive hardware.

Convolutional neural networks are particularly suitable for use with the proposed method as features may be learned automatically from training examples, e.g. large labeled data sets may be used for training and validation. Training data may e.g. have been previously collected by vehicles driving on a wide variety of roads and in a diverse set of lighting and weather conditions. CNN learning algorithms may be implemented on massively parallel graphics processing units (GPUs) in order to accelerate learning and inference.

The method further comprises performing, by the end-to-end trained neural network system 4 mapping 17 of the input data, such as raw sensor data 5 from on-board sensors 6 of the autonomous road vehicle 3 as well as object-level data 7 and tactical information data 8, to control commands 10 required to control travel of the autonomous road vehicle 3 over planned trajectories resulting from the control commands 10 for the autonomous road vehicle 3 over the pre-set time horizons. Thus, it is suggested to use a trained neural network 4, such as a convolutional neural network (CNN), to map the input data 5, 7, 8 directly to control commands 10.

The outputs of the end-to-end trained neural network system 4 consists of estimates of control commands 10 over a time horizon. The time horizon should be long enough to enable prediction of the system behavior, e.g., 1 second. This way the neural network system 4 learns to do long-term planning. The outputs may also be fed back into the model of the neural network system 4 to ensure smooth driving commands where the model takes previous decisions into consideration. The method may e.g. comprise automatically setting a control command for speed to an electronic horizon recommended value in case no obstacles are obscuring an intended trajectory and if the road conditions are proper. Otherwise it may comprise estimating a proper speed.

In connection with lateral control commands, the method should preferably provide for performing planned lane-changes, e.g. changing to the appropriate lane for turning in intersections at an early stage. As such, one of the outputs of the system should, in such cases, be a lane-changing signal 13. This lane-changing signal 13 should be fed back into the neural network system 4 in a recurrent fashion to allow for smooth overtakes etc.

Further in accordance with the proposed method a safety module 9 is subjected 18 to the control commands 10 for the autonomous road vehicle 3 over the pre-set time horizons. Risk assessment 19 of planned trajectories resulting from the control commands 10 for the autonomous road vehicle over the pre-set time horizons is performed by the safety module 9. Control commands 2 to be used to control travel of the autonomous road vehicle 3 are validated as safe, illustrated by the Y option in figure 1, are thereafter output 20 from the safety module 9 to control travel of the autonomous road vehicle 3. These validated control commands 2 may e.g. be output to a vehicle control module 15 of the autonomous road vehicle 3. The option X serves to schematically illustrate the rejection of control commands 10 which the safety module 9 are unable to validate as safe.

In order to enhance the planning capability from predicted system behavior some embodiments of the method include adding to the end-to-end trained neural network system 4 a machine learning component 11. Such a machine learning component 11 adds to the method the ability to "learn", i.e., progressively improve the performance from new data, without being explicitly programmed. Another alternative for this is through more advanced methods, such as value-iteration networks.

In some further embodiments the method further comprises providing as a feedback 12 to the end-to-end trained neural network system 4 validated control commands 2 for the autonomous road vehicle 3 validated as safe by the safety module 9. In this way it becomes possible to further train the neural network system 4 to avoid unfeasible or unsafe series of control commands. In such embodiments the safety module 9 must be available for system training.

Thus, provided hereby is a method that can act as an end-to-end solution for holistic decision making for an autonomous road vehicle 3 in complex traffic environments. The method operates on rich sensor information 5, 7, 8, allowing proper decisions to be made and planning for what control commands 2 to take for future time horizons.

The proposed arrangement 1 for generating validated control commands 2 for an autonomous road vehicle 3 comprises an end-to-end trained neural network system 4 arranged to receive an input of raw sensor data 5 from on-board sensors 6 of the autonomous road vehicle 3 as well as object-level data 7 and tactical information data 8.

The end-to-end trained neural network system 4 of the proposed arrangement 1 for generating validated control commands for an autonomous road vehicle 3 may further be arranged to receive as raw sensor data 5 at least one of: image data; speed data and acceleration data, from one or more on-board sensors 6 of the autonomous road vehicle 3. The raw sensor data 5 may for example be images from vision systems of the autonomous road vehicle 3 and information about speed and accelerations thereof, e.g. obtained by tapping into the autonomous road vehicle's Controller Area Network (CAN) or similar. The image data can include images from surround view cameras and also consist of several recent images.

The end-to-end trained neural network system 4 may still further be arranged to receive as object-level data 7 at least one of: the position of surrounding objects; lane markings and road conditions.

Furthermore, the end-to-end trained neural network system 4 may be arranged to receive as tactical information data 8 at least one of: electronic horizon (map) information, comprising current traffic rules and road geometry, and high-level navigation information. Electronic horizon (map) information about current traffic rules and road geometry enables the end-to-end trained neural network system 4 to take things such as allowable speed, highway exits, roundabouts, and distances to intersections into account when making decisions.

In order to guide the end-to-end trained neural network system 4 in situations when lane-changes, highway exits, or similar actions are needed, the system can be arranged to include as input to the end-to-end trained neural network system 4 high-level navigation information. This way, the end-to-end trained neural network system 4 will be able to take user preference into account, for example driving to a user specified location.

The end-to-end trained neural network system 4 should either be based on convolutional neural networks (CNNs) or on recurrent neural networks (RNNs). End-to-end training of the neural network 4 should have been done prior to using the neural network 4 in the proposed arrangement 1 and should have been performed end-to-end in either a supervised fashion, where the neural network 4 has been allowed to observe expert driving behavior for a very large amount of possible traffic scenarios and/or by means of reinforcement learning in a simulated environment.

In the supervised case, using a very large and diverse data set will enable a model to become as general as possible in operating range. In a reinforcement setting, the system will be trained in a simulated environment where the system will try to improve good behavior and suppress bad behavior. Doing this in simulations will allow the training of the system to be more exploratory, without imposing risk onto people or expensive hardware.

Convolutional neural networks are particularly suitable for use with the proposed arrangement as it enables features to be learned automatically from training examples, e.g. by using large labeled data sets for training and validation thereof. Training data may e.g. have been previously collected by vehicles driving on a wide variety of roads and in a diverse set of lighting and weather conditions. Training may alternatively be based on a pre-defined set of classes, e.g. overtaking, roundabouts etc. but also on a "general" class that captures all situations that are not explicitly defined. CNN learning algorithms may be implemented on massively parallel graphics processing units (GPUs) in order to accelerate learning and inference.

The end-to-end trained neural network system 4 should further be arranged to map input data, such as raw sensor data 5 from on-board sensors 6 of the autonomous road vehicle 3 as well as object-level data 7 and tactical information data 8, to control commands 10 required to control travel of the autonomous road vehicle 3 over planned trajectories resulting from the control commands 10 for the autonomous road vehicle 3 over the pre-set time horizons. Thus, it is suggested to use a trained neural network 4, such as a convolutional neural network (CNN), to map the input data 5, 7, 8 directly to control commands 10.

The end-to-end trained neural network system 4 outputs consists of estimates of control commands 10 over a time horizon. The time horizon should be long enough to be able to predict the system behavior, e.g., 1 second. This way the neural network system 4 learns to do long-term planning. The outputs 10 may also be fed back into the model of the neural network system 4 as to ensure smooth driving commands where the model takes previous decisions into consideration. A control command for speed may e.g. be automatically set by the neural network system 4 to an electronic horizon recommended value in case no obstacles are obscuring an intended trajectory and if the road conditions are proper. Otherwise a proper speed may be estimated by the neural network system 4.

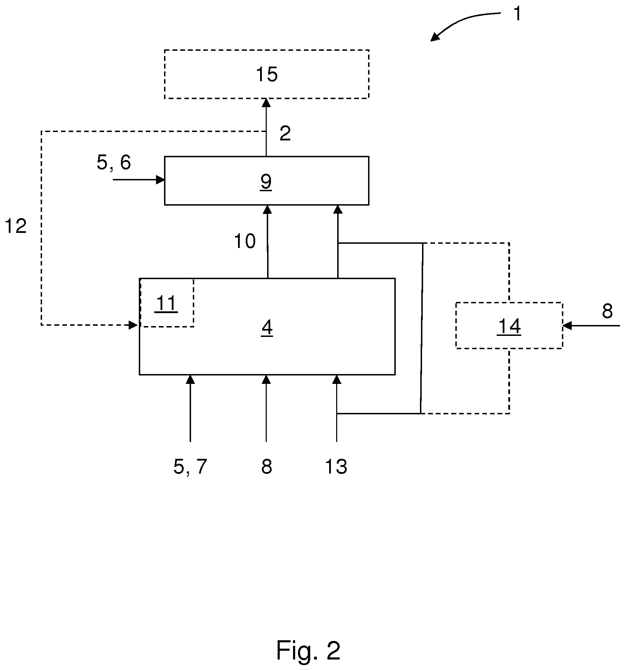

In connection with lateral control commands, the neural network system 4 should preferably be able to perform planned lane-changes, e.g. changing to the appropriate lane for turning in intersections at an early stage. As such, one of the outputs of the system should be a lane-changing signal 13. This lane-changing signal 13 should be fed back into the system in a recurrent fashion to allow for smooth overtakes etc. At the bottom right of figure 2, the lane-change signal 13 is portrayed in two settings. A first one where a feedback controller 14 is included and a second one where it is not. The optional feedback controller 14 is provided as a link between a driver or a safety monitor and the system. The link can also serve as an ADAS feature, where a driver may trigger a lane-change by for example engaging a turn signal. The optional feedback controller 14 may also be arranged to provide feedback based on other tactical information 8 in addition to lane-change information.

A safety module 9 is arranged to receive the control commands 10 for the autonomous road vehicle 3 over the pre-set time horizons and perform risk assessment of planned trajectories resulting from the control commands 10 for the autonomous road vehicle 3 over the pre-set time horizons. The safety module 9 is also arranged to validate as safe control commands 2 to be used to control travel of the autonomous road vehicle 3 and thereafter output such validated control commands 2 to control travel of the autonomous road vehicle 3. These validated control commands 2 may e.g. be output to a vehicle control module 15. The safety module 9 may also be arranged to receive raw sensor data 5 and object-level data 7.

To enhance the planning capability from predicted system behavior the end-to-end trained neural network system 4 of the arrangement 1 may further comprise a machine learning component 11. Such a machine learning component 11 adds to the arrangement 1 the ability to "learn", i.e., progressively improve the performance from new data, without being explicitly programmed. Another alternative for this is through more advanced methods, such as value-iteration networks.

The arrangement 1 may further be arranged to feedback 12 to the end-to-end trained neural network system 4 validated control commands 2 for the autonomous road vehicle 3 validated as safe by the safety module 9. This makes it possible to further train the neural network system 4 to avoid unfeasible or unsafe series of control commands. In such embodiments the safety module 9 must be available for system training.

Thus, provided hereby is an arrangement 1 that can act as an end-to-end solution for holistic decision making for an autonomous road vehicle 3 in complex traffic environments and in any driving situation. The neural network system 4 thereof is arranged to operate on rich sensor information 5, 7, 8, allowing it to make proper decisions and plan for what control commands 2 to take for future time horizons. The neural network system 4 of the arrangement 1 may consist of only one learned neural network for generating validated control commands 2 for performing driving of an autonomous road vehicle 3.

Also, here envisaged is an autonomous road vehicle 3 that comprises an arrangement 1 as set forth herein.

## Claims

1. Method for generating validated control commands (2) for an autonomous road vehicle (3), **characterized in that** it comprises:
providing (16) as input data to an end-to-end trained neural network system (4) raw sensor data (5) from on-board sensors (6) of the autonomous road vehicle (3) as well as object-level data (7) and tactical information data (8);
mapping (17), by the end-to-end trained neural network system (4), input data (5, 7, 8) to estimates of control commands (10) for the autonomous road vehicle (3) over pre-set time horizons and outputting from the end-to-end trained neural network system (4) the estimates of control commands (10) over the pre-set time horizons;
subjecting (18) the estimates of control commands (10) for the autonomous road vehicle (3) over the pre-set time horizons to a safety module (9) arranged to perform risk assessment of planned trajectories resulting from the estimates of control commands (10) for the autonomous road vehicle (3) over the pre-set time horizons, said safety module (9) receiving also raw sensor data (5) and object-level data (7) as input;
validating (19) as safe and outputting (20) from the safety module (9) validated control commands (2) for the autonomous road vehicle (3).

2. A method (1) according to claim 1, wherein it further comprises adding to the end-to-end trained neural network system (4) a machine learning component (11).

3. A method (1) according to any one of claims 1 or 2, wherein it further comprises providing as a feedback (12) to the end-to-end trained neural network system (4) validated control commands (2) for the autonomous road vehicle (3) validated as safe by the safety module (9).

4. A method (1) according to any one of claims 1 to 3, wherein it further comprises providing as raw sensor data (5) at least one of: image data; speed data and acceleration data, from one or more on-board sensors (6) of the autonomous road vehicle (3).

5. A method (1) according to any one of claims 1 to 4, wherein it further comprises providing as object-level data (7) at least one of: the position of surrounding objects; lane markings and road conditions.

6. A method (1) according to any one of claims 1 to 5, wherein it further comprises providing as tactical information data (8) at least one of: electronic horizon (map) information, comprising current traffic rules and road geometry, and high-level navigation information.

7. Arrangement (1) for generating validated control commands (2) for an autonomous road vehicle (3),
**characterized in that** it comprises:
an end-to-end trained neural network system (4) arranged to receive as input data raw sensor data (5) from on-board sensors (6) of the autonomous road vehicle (3) as well as object-level data (7) and tactical information data (8);
the end-to-end trained neural network system (4) further being arranged to map input data (5, 7, 8) to estimates of control commands (10) for the autonomous road vehicle (3) over pre-set time horizons and outputting from the end-to-end trained neural network system (4) the estimates of control commands (10) over the pre-set time horizons;
a safety module (9) arranged to receive the estimates of control commands (10) for the autonomous road vehicle (3) over the pre-set horizons and perform risk assessment of planned trajectories resulting from the control commands (10) for the autonomous road vehicle (3) over the pre-set time horizons, said safety module (9) being arranged to also receive raw sensor data (5) and object-level data (7) as input;
the safety module (9) further being arranged to validate as safe and output validated control commands (2) for the autonomous road vehicle (3).

8. Arrangement (1) for generating validated control commands (2) for an autonomous road vehicle (3) according to claim 7, wherein it further comprises that the end-to-end trained neural network system (4) further comprises a machine learning component (11).

9. Arrangement (1) for generating validated control commands (2) for an autonomous road vehicle (3) according to any one of claims 7 to 8, wherein it further is arranged to feedback (12) to the end-to-end trained neural network system (4) validated control commands (2) for the autonomous road vehicle (3) validated as safe by the safety module (9).

10. Arrangement (1) for generating validated control commands (2) for an autonomous road vehicle (3) according to any one of claims 7 to 9, wherein it further comprises the end-to-end trained neural network system (4) being arranged to receive as raw sensor data (5) at least one of: image data; speed data and acceleration data, from one or more on-board sensors (6) of the autonomous road vehicle (3).

11. Arrangement (1) for generating validated control commands (2) for an autonomous road vehicle (3) according to any one of claims 7 to 10, wherein it further comprises the end-to-end trained neural network system (4) being arranged to receive as object-level data (7) at least one of: the position of surrounding objects; lane markings and road conditions.

12. Arrangement (1) for generating validated control commands (2) for an autonomous road vehicle (3) according to any one of claims 7 to 11, wherein it further comprises the end-to-end trained neural network system (4) being arranged to receive as tactical information data (8) at least one of: electronic horizon (map) information, comprising current traffic rules and road geometry, and high-level navigation information.

13. An autonomous road vehicle (3), **characterized in that** it comprises an arrangement (1) for generating validated control commands (2) according to any one of claims 7 to 12.

## Patentansprüche

1. Verfahren zur Erzeugung von validierten Steuerbefehlen (2) für ein autonomes Straßenfahrzeug (3), **dadurch gekennzeichnet, dass** es Folgendes umfasst:
Bereitstellen (16) von Sensorrohdaten (5) von On-Board-Sensoren (6) des autonomen Straßenfahrzeugs (3) sowie Daten auf Objektebene (7) und taktischen Informationsdaten (8) als Eingangsdaten für ein Ende-zu-Ende-trainiertes neuronales Netzwerksystem (4);
Abbilden (17) der Eingangsdaten (5, 7, 8) auf Schätzungen der Steuerbefehle (10) für das autonome Straßenfahrzeug (3) über voreingestellte Zeithorizonte durch das Ende-zu-Ende-trainierte neuronale Netzwerksystem (4) und Ausgeben der Schätzungen der Steuerbefehle (10) über die voreingestellten Zeithorizonte durch das Ende-zu-Ende-trainierte neuronale Netzwerksystem (4);
Unterziehen (18) der Schätzungen der Steuerbefehle (10) für das autonome Straßenfahrzeug (3) über die voreingestellten Zeithorizonte einem Sicherheitsmodul (9), das so eingerichtet ist, dass es eine Risikobewertung geplanter Trajektorien durchführt, die sich aus den Schätzungen der Steuerbefehle (10) für das autonome Straßenfahrzeug (3) über die voreingestellten Zeithorizonte ergeben, wobei das Sicherheitsmodul (9) auch Sensorrohdaten (5) und Daten auf Objektebene (7) als Eingabe empfängt;
Validieren (19) als sicher und Ausgeben (20) von validierten Steuerbefehlen (2) aus dem Sicherheitsmodul (9) für das autonome Straßenfahrzeug (3).

2. Verfahren (1) nach Anspruch 1, wobei es weiter das Hinzufügen einer maschinellen Lernkomponente (11) zu dem Ende-zu-Ende-trainierten neuronalen Netzwerksystem (4) umfasst.

3. Verfahren (1) nach einem der Ansprüche 1 oder 2, wobei es weiter das Bereitstellen von validierten Steuerbefehlen (2) für das autonome Straßenfahrzeug (3), die durch das Sicherheitsmodul (9) als sicher validiert wurden, als Rückkopplung (12) an das Ende-zu-Ende-trainierte neuronale Netzwerksystem (4) umfasst.

4. Verfahren (1) nach einem der Ansprüche 1 bis 3, wobei es weiter das Bereitstellen als Sensorrohdaten (5) mindestens eines der Folgenden umfasst: Bilddaten; Geschwindigkeitsdaten und Beschleunigungsdaten, von einem oder mehreren On-Board-Sensoren (6) des autonomen Straßenfahrzeugs (3).

5. Verfahren (1) nach einem der Ansprüche 1 bis 4, wobei es weiter das Bereitstellen als Daten (7) auf Objektebene mindestens eines der Folgenden umfasst: die Position von umgebenden Objekten; Fahrbahnmarkierungen und Straßenbedingungen.

6. Verfahren (1) nach einem der Ansprüche 1 bis 5, wobei es weiter das Bereitstellen (8) als taktische Informationsdaten mindestens eines der Folgenden umfasst: Informationen über den elektronischen Horizont (Karte), welche die aktuellen Verkehrsregeln und die Straßengeometrie umfassen, und/oder Navigationsdaten auf hoher Ebene.

7. Anordnung (1) zur Erzeugung von validierten Steuerbefehlen (2) für ein autonomes Straßenfahrzeug (3),
**dadurch gekennzeichnet, dass** sie Folgendes umfasst:
ein Ende-zu-Ende-trainiertes neuronales Netzwerksystem (4), das so eingerichtet ist, dass es als Eingabedaten Sensorrohdaten (5) von On-Board-Sensoren (6) des autonomen Straßenfahrzeugs (3) sowie Daten auf Objektebene (7) und taktische Informationsdaten (8) empfängt;
wobei das Ende-zu-Ende-trainierte neuronale Netzwerksystem (4) weiter so eingerichtet ist, dass es Eingabedaten (5, 7, 8) auf Schätzungen von Steuerbefehlen (10) für das autonome Straßenfahrzeug (3) über voreingestellte Zeithorizonte abbildet und von dem Ende-zu-Ende-trainierten neuronalen Netzwerksystem (4) die Schätzungen von Steuerbefehlen (10) über die voreingestellten Zeithorizonte ausgibt;
ein Sicherheitsmodul (9), das so eingerichtet ist, dass es die Schätzungen von Steuerbefehlen (10) für das autonome Straßenfahrzeug (3) über die voreingestellten Horizonte empfängt und eine Risikobewertung geplanter Trajektorien durchführt, die sich aus den Steuerbefehlen (10) für das autonome Straßenfahrzeug (3) über die voreingestellten Zeithorizonte ergeben, wobei das Sicherheitsmodul (9) so eingerichtet ist, dass es auch Sensorrohdaten (5) und Daten auf Objektebene (7) als Eingabe empfängt;
wobei das Sicherheitsmodul (9) weiter so eingerichtet ist, dass es als sicher validiert wird und validierte Steuerbefehle (2) für das autonome Straßenfahrzeug (3) ausgibt.

8. Anordnung (1) zur Erzeugung validierter Steuerbefehle (2) für ein autonomes Straßenfahrzeug (3) nach Anspruch 7, wobei sie weiter umfasst, dass das Ende-zu-Ende-trainierte neuronale Netzwerksystem (4) weiter eine maschinelle Lernkomponente (11) umfasst.

9. Anordnung (1) zur Erzeugung von validierten Steuerbefehlen (2) für ein autonomes Straßenfahrzeug (3) nach einem der Ansprüche 7 bis 8, wobei sie weiter so eingerichtet ist, dass sie validierte Steuerbefehle (2) für das autonome Straßenfahrzeug (3), die durch das Sicherheitsmodul (9) als sicher validiert wurden, an das Ende-zu-Ende-trainierte neuronale Netzwerksystem (4) rückkoppelt (12).

10. Anordnung (1) zur Erzeugung validierter Steuerbefehle (2) für ein autonomes Straßenfahrzeug (3) nach einem der Ansprüche 7 bis 9, wobei sie weiter das Ende-zu-Ende-trainierte neuronale Netzwerksystem (4) umfasst, das so eingerichtet ist, dass es als Sensorrohdaten (5) mindestens eines der Folgenden empfängt: Bilddaten; Geschwindigkeitsdaten und Beschleunigungsdaten, von einem oder mehreren On-Board-Sensoren (6) des autonomen Straßenfahrzeugs (3).

11. Anordnung (1) zur Erzeugung von validierten Steuerbefehlen (2) für ein autonomes Straßenfahrzeug (3) nach einem der Ansprüche 7 bis 10, wobei sie weiter das Ende-zu-Ende-trainierte neuronale Netzwerksystem (4) umfasst, das so eingerichtet ist, dass es als Daten auf Objektebene (7) mindestens eines der Folgenden empfängt: die Position von umgebenden Objekten; Fahrbahnmarkierungen und Straßenbedingungen.

12. Anordnung (1) zur Erzeugung von validierten Steuerbefehlen (2) für ein autonomes Straßenfahrzeug (3) nach einem der Ansprüche 7 bis 11, wobei sie weiter das Ende-zu-Ende-trainierte neuronale Netzwerksystem (4) umfasst, das so eingerichtet ist, dass es als taktische Informationsdaten (8) mindestens eine der Folgenden empfängt: Informationen über den elektronischen Horizont (Karte), welche die aktuellen Verkehrsregeln und die Straßengeometrie umfassen, und Navigationsdaten auf hoher Ebene.

13. Autonomes Straßenfahrzeug (3), **dadurch gekennzeichnet, dass** es eine Anordnung (1) zur Erzeugung von validierten Steuerbefehlen (2) nach einem der Ansprüche 7 bis 12 umfasst.

## Revendications

1. Procédé pour générer des instructions de commande validées (2) pour un véhicule routier autonome (3), **caractérisé en ce qu'**il comprend :
la fourniture (16), en tant que données d'entrée, à un système de réseau neuronal de bout en bout (4), ayant fait l'objet d'un apprentissage, de données brutes de capteur (5), à partir de capteurs embarqués (6) du véhicule routier autonome (3) ainsi que de données de niveau objet (7) et de données d'informations tactiques (8) ;
le mappage (17), par le système de réseau neuronal de bout en bout (4), ayant fait l'objet d'un apprentissage, des données d'entrée (5, 7, 8) sur des estimations de instructions de commande (10) pour le véhicule routier autonome (3) sur des horizons temporels prédéfinis et la sortie, à partir du système de réseau neuronal de bout en bout (4), ayant fait l'objet d'un apprentissage, des estimations d'instructions de commande (10) sur les horizons temporels prédéfinis ;
la soumission (18) des estimations de instructions de commande (10) pour le véhicule routier autonome (3) sur les horizons temporels prédéfinis à un module de sécurité (9) agencé pour réaliser une évaluation de risque de trajectoires planifiées résultant des estimations de instructions de commande (10) pour le véhicule routier autonome (3) sur les horizons temporels prédéfinis, ledit module de sécurité (9) recevant également des données brutes de capteur (5) et des données de niveau objet (7) en tant qu'entrée ;
la validation (19) de la sûreté d'instructions de commande validées (2) et leur sortie (20), à partir du module de sécurité (9), pour le véhicule routier autonome (3).

2. Procédé (1) selon la revendication 1, dans lequel il comprend en outre l'addition au système de réseau neuronal de bout en bout (4), ayant fait l'objet d'un apprentissage, d'un composant d'apprentissage machine (11).

3. Procédé (1) selon l'une quelconque des revendications 1 ou 2, dans lequel il comprend en outre la fourniture, en tant que fourniture en rétroaction (12), au système de réseau neuronal de bout en bout (4), ayant fait l'objet d'un apprentissage, d'instructions de commande validées (2) pour le véhicule routier autonome (3), dont la sûreté a été validée, par le module de sécurité (9).

4. Procédé (1) selon l'une quelconque des revendications 1 à 3, dans lequel il comprend en outre la fourniture, en tant que données brutes de capteur (5), d'au moins un de : données d'image ; et/ou données de vitesse et/ou données d'accélération, à partir d'un ou de plusieurs capteurs embarqués (6) du véhicule routier autonome (3).

5. Procédé (1) selon l'une quelconque des revendications 1 à 4, dans lequel il comprend en outre la fourniture, en tant que données de niveau objet (7), d'au moins un de : la position d'objets environnants ; et/ou marquages de voie et/ou conditions routières.

6. Procédé (1) selon l'une quelconque des revendications 1 à 5, dans lequel il comprend en outre la fourniture, en tant que données d'informations tactiques (8), d'au moins un de : informations d'horizon (carte) électroniques, y compris des règles de circulation et une géométrie routière actuelles, et/ou informations de navigation de haut niveau.

7. Agencement (1) pour générer des instructions de commande validées (2) pour un véhicule routier autonome (3),
**caractérisé en ce qu'**il comprend :
un système de réseau neuronal de bout en bout (4), ayant fait l'objet d'un apprentissage, agencé pour recevoir, en tant que données d'entrée, des données brutes de capteur (5), à partir de capteurs embarqués (6) du véhicule routier autonome (3), ainsi que des données de niveau objet (7) et des données d'informations tactiques (8) ;
le système de réseau neuronal de bout en bout (4), ayant fait l'objet d'un apprentissage, étant en outre agencé pour mapper les données d'entrée (5, 7, 8) sur des estimations d'instructions de commande (10) pour le véhicule routier autonome (3) sur des horizons temporels prédéfinis et sortir, à partir du système de réseau neuronal de bout en bout (4), ayant fait l'objet d'un apprentissage, les estimations d'instructions de commande (10) sur les horizons temporels prédéfinis ;
un module de sécurité (9) agencé pour recevoir les estimations d'instructions de commande (10) pour le véhicule routier autonome (3) sur les horizons prédéfinis et réaliser une évaluation de risque de trajectoires planifiées résultant des instructions de commande (10) pour le véhicule routier autonome (3) sur les horizons temporels prédéfinis, ledit module de sécurité (9) étant agencé pour également recevoir des données brutes de capteur (5) et des données de niveau objet (7) en tant qu'entrée ;
le module de sécurité (9) étant en outre agencé pour valider la sûreté d'instructions de commande validées (2) et les sortir pour le véhicule routier autonome (3).

8. Agencement (1) pour générer des instructions de commande validées (2) pour un véhicule routier autonome (3) selon la revendication 7, dans lequel il comprend en outre le fait que le système de réseau neuronal de bout en bout (4), ayant fait l'objet d'un apprentissage, comprend en outre un composant d'apprentissage machine (11).

9. Agencement (1) pour générer des instructions de commande validées (2) pour un véhicule routier autonome (3) selon l'une quelconque des revendications 7 à 8, dans lequel il est en outre agencé pour fournir en rétroaction (12), au système de réseau neuronal de bout en bout (4), ayant fait l'objet d'un apprentissage, des instructions de commande validées (2) pour le véhicule routier autonome (3), dont la sûreté a été validée par le module de sécurité (9).

10. Agencement (1) pour générer des instructions de commande validées (2) pour un véhicule routier autonome (3) selon l'une quelconque des revendications 7 à 9, dans lequel il comprend en outre le système de réseau neuronal de bout en bout (4), ayant fait l'objet d'un apprentissage, étant agencé pour recevoir, en tant que données brutes de capteur (5), : des données d'image ; et/ou des données de vitesse et/ou des données d'accélération, à partir d'un ou de plusieurs capteurs embarqués (6) du véhicule routier autonome (3).

11. Agencement (1) pour générer des instructions de commande validées (2) pour un véhicule routier autonome (3) selon l'une quelconque des revendications 7 à 10, dans lequel il comprend en outre le système de réseau neuronal de bout en bout (4), ayant fait l'objet d'un apprentissage, étant agencé pour recevoir, en tant que données de niveau objet (7), : la position d'objets environnants ; et/ou des marquages de voie et/ou des conditions routières.

12. Agencement (1) pour générer des instructions de commande validées (2) pour un véhicule routier autonome (3) selon l'une quelconque des revendications 7 à 11, dans lequel il comprend en outre le système de réseau neuronal de bout en bout (4), ayant fait l'objet d'un apprentissage, étant agencé pour recevoir, en tant que données d'informations tactiques (8), : des informations d'horizon (carte) électroniques, y compris des règles de circulation et une géométrie routière actuelles, et/ou des informations de navigation de haut niveau.

13. Véhicule routier autonome (3), **caractérisé en ce qu'**il comprend un agencement (1) pour générer des instructions de commande validées (2) selon l'une quelconque des revendications 7 à 12.
